# EUROPÄISCHE PATENTANMELDUNG

(11) **EP 2 353 701 A1**
(43) Veröffentlichungstag der Anmeldung: **10.08.2011**
(21) Anmeldenummer: 11151714.0
(22) Anmeldetag: 21.01.2011
(51) Int. Cl.: B01D 53/14, B01D 53/48, F28C 1/00

(54) **Rauchgaswäscher mit zugeordnetem Kühlturm**

(30) Priorität: 27.01.2010 DE 102010006032; 23.12.2010 DE 102010061538
(71) Anmelder: Hitachi Power Europe GmbH, 47059 Duisburg (DE)
(72) Erfinder: Papenheim, Georg, 47647, Kerken (DE); Henninger, Stephanie, 45721, Haltern am See (DE)
(74) Vertreter: Viering, Jentschura & Partner

(57) **Zusammenfassung**

Bei Rauchgasbehandlungsvorrichtung umfassend einen Rauchgaswäscher (1) mit angeschlossenem Rezirkulationskreislauf, in welchem eine natriumhydroxidhaltiges Absorptionsmittel und in dem Rauchgaswäscher (1) aus dem zu reinigenden Rauchgasstrom auskondensiertes Wasser enthaltende Flüssigkeit rezirkuliert, und einer in dem Rezirkulationskreislauf angeordneten Kühlvorrichtung, wobei der Rauchgaswäscher (1) mit einer vorgeschalteten, Rauchgas zuführenden Rauchgasentschwefelungsanlage verbunden ist, soll eine Lösung geschaffen werden, die eine verbesserte Kühlung der im Rauchgaswäscher rezirkulierten, Natriumhydroxid und auskondensiertes Wasser enthaltenden Flüssigkeit und gleichzeitig eine Reduzierung der als Abwasser abzuführenden Rezirkulationskreislaufflüssigkeitsmenge ermöglicht. Dies wird dadurch erreicht, dass die in dem Rezirkulationskreislauf angeordnete Kühlvorrichtung ein Kühlturm (8) ist.

## Beschreibung

Eine Rauchgasbehandlungsvorrichtung umfassend einen Rauchgaswäscher mit angeschlossenem Rezirkulationskreislauf, in welchem eine natriumhydroxidhaltiges Absorptionsmittel und in dem Rauchgaswäscher auskondensiertes Wasser enthaltende Flüssigkeit rezirkuliert, und einer in dem Rezirkulationskreislauf angeordneten Kühlvorrichtung, wobei der Rauchgaswäscher mit einer vorgeschalteten Rauchgas zuführenden Rauchgasentschwefelungsanlage verbunden ist.

Weiterhin richtet sich die Erfindung auf ein Verfahren zur Rauchgasreinigung, bei welchem Rauchgas nach vorhergehender Behandlung in einer Rauchgasentschwefelungsanlage in einem mit einem natriumhydroxidhaltigen Absorptionsmittel betriebenen Rauchgaswäscher behandelt wird, der einen angeschlossenen Rezirkulationskreislauf aufweist, in welchem eine natriumhydroxidhaltiges Absorptionsmittel und im Rauchgaswäscher auskondensiertes Wasser enthaltende Flüssigkeit rezirkuliert und gekühlt wird.

Seit geraumer Zeit, spätestens seit Unterzeichnung des Kyoto-Protokolls, werden intensive Anstrengungen unternommen, um die Emission des bei der Verbrennung fossiler Brennstoffe entstehenden Gases CO₂ in die Atmosphäre zu vermindern. Bei fossil befeuerten, insbesondere kohlebefeuerten, Kraftwerken stehen hierfür drei grundsätzliche Verfahrensrouten zur Verfügung: Die Abscheidung vor der Verbrennung, die integrierte Abscheidung und die Abscheidung nach der Verbrennung.

Das Prinzip der Abscheidung vor der Verbrennung (precombustion) basiert auf der Umsetzung des fossilen Brennstoffes zu einem aus Kohlenmonoxid und Wasserstoff bestehenden Synthesegas, wobei in einem weiteren Schritt das Kohlenmonooxid zu Kohlendioxid (CO₂) aufoxidiert und dann aus dem Prozess entfernt wird.

Die integrierte Abscheidung wird beim so genannten Oxy-Fuel-Prozess realisiert. Hierbei wird ein hochkonzentrierter Kohlendioxid(CO₂)-Abgasstrom durch die Verbrennung des fossilen Brennstoffes, insbesondere Kohle, mit reinem Sauerstoff anstelle von Luft erzeugt, der nach Kondensation des Wasserdampfanteils ohne zusätzliche Wäsche direkt entsorgt werden kann.

Bei dem dritten Verfahren, der Abscheidung nach der Verbrennung (post-combustion), das insbesondere bei konventionellen Kraftwerken Anwendung findet, wird das Kohlendioxid (CO₂) mittels einer Wäsche abgetrennt. Hierbei wird das Rauchgas am Ende des Rauchgasreinigungsstranges mittels einer CO₂-Wäsche mittels chemischer Absorption aus dem Rauchgas größtenteils entfernt, so dass ein CO₂-armes Abgas das Kraftwerk verlässt. Diese CO₂-Wäsche findet in einem Absorber statt, wobei die chemische Absorption mittels eines Waschmittels, insbesondere Monoethanolamin (MEA), aber auch Diethanolamin (DEA) oder Methyldiethanolamin (MDEA), erfolgt. Das mit CO₂ beladene Waschmittel wird in einem Desorber oder Regenerator von dem CO₂ befreit und aufbereitet und anschließend im Kreislauf zum Absorber zurückgeführt. Den Desorber oder Regenerator verlässt ein höchst CO₂-haltiges Abgas, das in einer anschließenden CO₂-Kompression verflüssigt und danach zur endgültigen Lagerung oder Weiterverwendung aus dem Bereich des Kraftwerks entfernt wird.

Eine Möglichkeit, das im Rauchgas von brennstoffbefeuerten, insbesondere fossilbefeuerten, vorzugsweise kohlebefeuerten, und hier insbesondere braunkohlebefeuerten, Brennkammern von Großkraftwerken entstehende Rauchgas vom darin enthaltenem CO₂ (Kohlendioxid) zu befreien, besteht darin, das Rauchgas einer Aminwäsche, insbesondere mit einer MonoethanolaminLösung zu unterwerfen. Um eine solche Aminwäsche unter Betriebsbedingungen in der Praxis mit ausreichenden Standzeiten und akzeptablen Betriebszeiten, sowie möglichst auch kontinuierlich, betreiben zu können, muss das der Aminwäsche zugeführte Rauchgas aber weitgehend frei sein von SO₂, SO₃ und Staub.

In der DE 10 2007 043 331 A1 ist daher schon vorgeschlagen worden, einer solchen Aminwäsche eine Rauchgaswäsche mit einem NaOH (Natriumhydroxid)-haltigen Absorptionsmittel vorzuschalten und dieser NaOH-Wäsche wiederum eine Rauchgasentschwefelungsanlage als erste Stufe der Behandlung des bei der Verbrennung entstehenden Rauchgases vorzuschalten. Hierbei wird zur Verbesserung des Wirkungsgrades der NaOH-Wäsche an dem damit ausgestatteten Rauchgaswäscher ein angeschlossener Rezirkulationskreislauf vorgesehen, in welchem eine ein natriumhydroxidhaltiges Absorptionsmittel und in dem Rauchgaswäscher auskondensiertes Wasser enthaltende Flüssigkeit umgewälzt und gekühlt wird. Zur Kühlung ist in dem Kreislauf ein Wärmetauscher angeordnet. Der Nachteil dieser Anordnung besteht darin, dass mittels dieses Wärmetauschers die umgewälzte und rezirkulierte Flüssigkeit nur indirekt gekühlt und der Wärmetauscher seinerseits mit einem ausreichend gekühlten Kühlmedium versorgt werden muss.

Bei der Anwendung des aus der DE 10 2007 043 331 A1 bekannten Verfahrens zur Rauchgasbehandlung eines bei der Verfeuerung von Braunkohle in einem Dampferzeuger eines Großkraftwerkes entstehenden Rauchgasstroms besteht zudem die Problematik, dass in dem mit dem angeschlossenen Rezirkulationskreislauf ausgestatteten NaOH-Rauchgaswäscher eine mehrfache Menge an auskondensiertem Wasser anfällt, als der vorgeschalteten Rauchgasentschwefelungsanlage zur Verarbeitung als natriumhaltige Wasch-Flüssigkeit zugeführt werden kann. Aus diesem Grunde muss die dem Rezirkulationskreislauf zugeführte natriumhydroxidhaltige Flüssigkeit daher abgelassen und einer Abwasserbehandlungsanlage zugeführt werden, da andernfalls die im Kreislauf zu rezirkulierende Wassermenge zu groß und nicht mehr zu kontrollieren wäre.

Diese Problematik tritt nicht nur bei Rauchgasbehandlungsvorrichtungen oder Rauchgasbehandlungsanlagen auf, die eine der NaOH-Wäsche nachgeschaltete CO₂-Wäsche umfassen, sondern auch bei nach dem Oxyfuel-Prozess arbeitenden und mit einer dem Dampferzeuger mit zugeordneter Brennkammer nachgeschalteten NaOH-Wäsche des dabei entstehenden Rauchgasstromes ausgestattet sind. Aufgrund der besonderen Fahrweise dem OxyFuel-Betrieb würde bei einem so genannten Oxyfuel-Kraftwerk der 800 MW-Klasse der Abwasserstrom auf über 100 m³/h ansteigen, wobei er bei einem konventionellen Kraftwerk der 800 MW-Klasse ca. 30 m³/h betragen würde.

Der Erfindung liegt daher die Aufgabe zugrunde, eine Lösung zu schaffen, die eine verbesserte Kühlung der im Rauchgaswäscher rezirkulierten, Natriumhydroxid und auskondensiertes Wasser enthaltenden Flüssigkeit und gleichzeitig eine Reduzierung der als Abwasser abzuführenden Rezirkulationskreislaufflüssigkeitsmenge ermöglicht.

Bei einer Rauchgasbehandlungsanlage der eingangs näher bezeichneten Art wird diese Aufgabe erfindungsgemäß dadurch gelöst, dass die in dem Rezirkulationskreislauf angeordnete Kühlvorrichtung ein Kühlturm ist.

Bei dem eingangs näher bezeichneten Verfahren wird diese Aufgabe erfindungsgemäß dadurch gelöst, dass die im Rezirkulationskreislauf rezirkulierte Flüssigkeit durch Verrieselung in einem Kühlturm gekühlt und zum Rauchgaswäscher rückgeführt wird.

Vorteilhafte Weiterbildungen und zweckmäßige Ausgestaltungen der Erfindung sind Gegenstand der jeweiligen Unteransprüche.

Durch die Erfindung wird erreicht, dass die in dem Rezirkulationskreislauf des NaOH-Rauchgaswäschers rezirkulierte Flüssigkeit deutlich besser und auch auf eine niedrigere Temperatur gekühlt wird, als dies beim vorbekannten Stand der Technik mittels eines Wärmetauschers bisher möglich war. Die bisher üblichen kühlwasserbetriebenen Wärmetauscher werden mit im Kühlturm gekühltem Kühlwasser betrieben, so dass hier ein Wärmeverlust bei der Kühlung auf die im Rezirkulationskreislauf geführte Flüssigkeit gegeben war. Durch die erfindungsgemäß nun erfolgende direkte Kühlung der Flüssigkeit im Kühlturm, lässt sich deren Temperatur auf einen niedrigeren Wert reduzieren. Dies führt zudem dazu, dass sich in dem Rauchgaswäscher in dem den Rauchgaswäscher verlassenden und ggf. einer nachgeschalteten CO₂-Wäsche zugeführten Rauchgas ein gegenüber dem vorbekannten Stand der Technik deutlich niedrigerer Wassergehalt - bedingt durch die niedrigere Kühltemperatur der rezirkulierenden Kühl- und Absorptionsflüssigkeit - eingestellt, was sich in einer ggf. nachfolgenden CO₂-Wäsche vorteilhaft niederschlägt. Ferner wird durch die Verrieselung der im Kreislauf rezirkulierten Flüssigkeit im Kühlturm von dieser dort der für die Reaktion von SO₂ mit NaOH zum Sulfat benötigte Sauerstoff aufgenommen, so dass eine Oxidationsluftzugabe in den Rauchgaswäscher oder den Rezirkulationskreislauf nicht (mehr) erforderlich ist. Insbesondere aber wird durch die vom NaOH-Rauchgaswäscher dem Kühlturm im Rahmen des Rezirkulationskreislaufes zugeführte natriumhydroxidhaltige und im NaOH-Rauchwäscher auskondensiertes Wasser enthaltende Flüssigkeit erreicht, das der Wassergehalt dieser Flüssigkeit im Kühlturm weitestgehend verdampft und somit in die Atmosphäre abgegeben wird. Der nicht verdampfte und weiterhin im Kreislauf dem NaOH-Rauchgaswäscher zugeführte Wasseranteil in der Rezirkulationskreislaufflüssigkeit ist dann so weit reduziert, dass eine weitere Abflutung oder Abführung von Wasser in eine Abwasserbehandlungsanlage nicht notwendig ist. Dies führt bei im Oxyfuel-Betrieb gefahrenen Kraftwerken dazu, dass der Abwasserstrom sich weiterhin auf dem Niveau wie bei einem konventionellen Kraftwerk befindet, d.h. bei einem Kraftwerk der 800 MW-Klasse weiterhin bei ≤ 30 m³/h liegt. Die weiterhin bestehende Abflutung aus dem NaOH-Rauchgaswäscher in die vorgeschaltete Rauchgasentschwefelungsanlage stellt die notwendige Abflutung zur Abschleusung der Salze aus dem NaOH-Rauchgaswäscher dar und ist zusammen mit der darin enthaltenden Menge des in dem NaOH-Rauchgaswäschers auskondensierten Wassers in der vorgeschalteten Rauchgasentschwefelungsanlage problemlos verarbeitbar.

Während die erfindungsgemäße Rauchgasbehandlungsvorrichtung und das erfindungsgemäße Verfahren im Zusammenhang mit der Rauchgasbehandlung einer nachgeschalteten CO₂-Wäsche eine Vorrichtung zur Vorbereitung des Rauchgasstromes für die nachfolgende CO₂-Wäsche ausbilden, bilden diese bei einem im Oxyfuel-Betrieb gefahrenen Oxyfuel-Kraftwerk einen Rauchgasfeinwäscher oder Rauchgastrockner aus, der den hoch CO₂-haltigenRauchgasstrom so weit trocknet, d.h. ihm Wasser entzieht, dass er einer anschließenden Lagerung zugeführt werden kann. Hierbei macht es die Verdunstung des Wassers in die Atmosphäre zudem möglich, den gewohnten Abwasserstrom auf die üblicherweise vorhandende oder in üblichen Dimensionen konzipierte Abwasseranlage der Rauchgasreinigung eines jeweiligen Kraftwerkes zu fahren beziehungsweise abzuführen. Die Rauchgastrocknung ergibt sich dadurch, dass durch die Kühlung der im Rezirkulationskreislauf geführten Flüssigkeit in dem NaOH-Rauchgaswäscher die vorstehend beschriebene verbesserte und erhöhte Auskondensation an Rauchgaswasser sich einstellt.

Da sich die Rauchgasbehandlungsvorrichtung und das Verfahren sehr gut eignen, um einen Rauchgasstrom für eine anschließende CO₂-Wäsche vorzubereiten, sieht die Erfindung in Ausgestaltung vor, dass der Rauchgaswäscher mit einer nachgeschalteten, das im Rauchgaswäscher behandelte Rauchgas aufnehmenden CO₂-Wäsche mittels eines aminhaltigen Absorptionsmittels leitungsmäßig verbunden ist. Ebenso zeichnet sich das erfindungsgemäße Verfahren in Weiterbildung dadurch aus, dass das Rauchgas im Anschluss an den Rauchgaswäscher in einer nachgeschalteten CO₂-Wäsche mit einem aminhaltigen Absorptionsmittel behandelt wird.

Der Kühlturm kann auch weiterhin dazu genutzt werden, dass das in der CO₂-Wäsche gereinigte, CO₂-arme Rauchgas über diesen abgegeben wird, so dass auf die Errichtung eines separaten Schornsteins verzichtet werden kann. Die Erfindung zeichnet sich daher weiterhin dadurch aus, dass bei der erfindungsgemäßen Rauchgasbehandlungsvorrichtung in den Kühlturm eine das die CO₂-Wäsche verlassende, CO₂-gereinigte Rauchgasbehandlungsanlage führende Leitung einmündet. Bei dem erfindungsgemäßen Verfahren ist entsprechend vorgesehen, dass das die CO₂-Wäsche verlassende, CO₂-gereinigte Rauchgas dem Kühlturm zugeführt wird.

Schließlich zeichnet sich die Rauchgasbehandlungsvorrichtung noch dadurch aus, dass sie Bestandteil einer den bei der Brennstoffverfeuerung in der Brennkammer eines Dampferzeugers eines Großkraftwerkes entstehenden Rauchgasstrom reinigenden Rauchgasbehandlungsanlage ist. In gleicher Weise zeichnet sich das erfindungsgemäße Verfahren schließlich noch dadurch aus, dass ein bei der Brennstoffverfeuerung in der Brennkammer eines Dampferzeugers eines Großkraftwerks entstehender Rauchgasstrom gereinigt wird.

Die Erfindung ist nachstehend anhand einer Zeichnung beispielhaft näher erläutert.

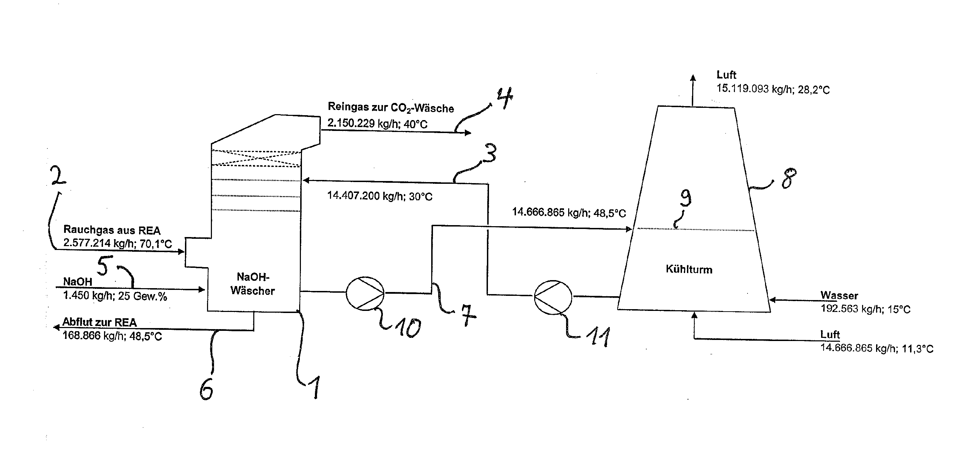

Die einzige Figur zeigt einen Rauchgaswäscher einer diesen umfassenden Rauchgasbehandlungsvorrichtung, in dem über eine Leitung 2 aus einer nicht dargestellten, vorgeschalteten Rauchgasentschwefelungsanlage, die ebenfalls Bestandteil der Rauchgasbehandlungsvorrichtung ist, Rauchgas zugeführt wird. Das Rauchgas strömt in dem Rauchgaswäscher 1 im Gegenstrom zu einer über eine Zuführleitung 3 zugeführte, natriumhydroxidhaltiges Absorptionsmittel enthaltende Waschflüssigkeit und verlässt den Rauchgaswäscher 1 über eine Reingasleitung 4, mit welcher der Rauchgaswäscher 1 mit einer nicht dargestellten, nachgeschalteten und ebenfalls von der Rauchgasbehandlungsvorrichtung umfassten CO₂-Wäsche des Rauchgases mit einem aminhaltigen Absorptionsmittel, insbesondere einer Monoethanolaminlösung, verbunden ist. Im Sumpf des NaOH-Rauchgaswäschers 1 wird dem Rauchgaswäscher Natronlauge oder natriumhydroxidhaltiges Absorptionsmittel über eine Leitung 5 zugeführt. Über eine Abflutungsleitung 6 ist der Sumpf des Rauchgaswäschers 1 weiterhin mit der vorgeschalteten Rauchgasentschwefelungsanlage leitungsmäßig verbunden. Von dem Sumpf des Rauchgaswäschers 1 zweigt weiterhin eine Abführleitung 7 ab, mittels welcher eine sich im unteren Bereich des Rauchgaswäschers 1 sammelnde, natriumhydroxidhaltiges Absorptionsmittel und in dem Rauchgaswäscher 1 auskondensiertes Wasser enthaltende Flüssigkeit einem Kühlturm 8 zugeführt und dort verrieselt (9) wird. Über die Zuführleitung 3 wird die in dem Kühlturm verrieselte Flüssigkeit (zumindest) teilweise wieder in den Rauchgaswäscher 1 rückgeführt. Der Rest, insbesondere große Teile des in der Absorptionsflüssigkeit enthaltenden Wassers, verdampft/verdampfen in die Atmosphäre. Die Abführleitung 7, der Kühlturm 8 mit Verrieselung 9 und die Zuführleitung 3 bilden den dem Rauchgaswäscher 1 zugeordneten Rezirkulationskreislauf zur Rezirkulation der natriumhydroxidhaltiges Absorptionsmittel und in dem Rauchgaswäscher auskondensiertes Wasser enthaltenden Flüssigkeit aus. Um den notwendigen Transport in den Leitungen sicherzustellen, sind in den den Rezirkulationskreislauf bildenden Leitungen entsprechende Pumpen 10, 11 angeordnet.

Bei der dargestellten Ausführungsform wird die umgewälzte (Wasch-)Flüssigkeit direkt in dem zugeordneten Kühlturm 8 gekühlt und dann gekühlt in den Rauchgaswäscher 1 eingedüst, wodurch auch eine entsprechende Kühlung des darin geführten Rauchgases erzielt wird. Da das in den Rauchgaswäscher 1 eintretende Rauchgas vollständig wasserdampfgesättigt ist, kondensiert hierdurch im Rauchgaswäscher 1 Wasser aus.

Über die Abflutungsleitung 6 wird ein Teil der sich in dem Rauchgaswäscher 1 bildenden (Wasch-)Flüssigkeit zur Ausschleusung der Salze der vorgeschalteten Rauchgasentschwefelungsanlage zugeführt, wodurch das im Rauchgaswäscher 1 entstehende Natriumsulfat, ein Teil des hier auskondensierten Wassers und der aus dem Rauchgas abgeschiedene Staub an die Rauchgasentschwefelungsanlage abgegeben werden. Im Absorber der Rauchgasentschwefelungsanlage, die auf Kalkstein/Gips-Basis arbeitet, wird das Natriumsulfat mit dem dort vorhandenen Kalziumchlorid zu Gips und Natriumchlorid umgesetzt. Die durch die Abflutungsleitung 6 der Rauchgasentschwefelungsanlage zugeführte zusätzliche Menge an Natrium bewirkt in der Rauchgasentschwefelungsanlage eine Verbesserung des Abscheidegrades.

Insbesondere bei einem einer Verbrennung von Braunkohle in einer Brennkammer eines Kraftwerkes nachgeschalteten Rauchgaswäscher 1 kondensiert in diesem ein Mehrfaches der Menge an Wasser aus, als es über die Abflutungsleitung 6 zur vorgeschalteten Rauchgasentschwefelungsanlage abgegeben werden kann. Durch die Umwälzung der dieses auskondensierte Wasser enthaltenden Flüssigkeit zum Kühlturm und der Verrieselung der Flüssigkeit in dem Kühlturm 8 ist es nun möglich, hier im Kühlturm überschüssiges Wasser zu verdampfen, so dass über die Abflutungsleitung 6 lediglich noch die für eine Entsalzung notwendige Abflutung an die vorgeschaltete Rauchgasentschwefelungsanlage erfolgen muss.

Bei einem Ausführungsbeispiel zur Behandlung der Rauchgase (ca. 2.000.000 m³/h [N.tr.] nach einem 500 MW Braunkohlekessel, bei 157°C, mit SOₓ 8460 mg/m³ [N.tr.], HCl 125 mg/m³ [N.tr.], HF 21 mg/m³ [N.tr.], Staub 20 mg/m³ [N.tr.] und CO₂ 12%, H₂O 25%, O₂ 3%, Ar 0,7% und Rest N₂) wird der Abgasstrom zunächst in einen Kalksteinwaschprozess geleitet, welcher Gipssuspension als Produkt zur Folge hat. Hierbei werden SO₂, SO₃, HCl, HF und Staub abgeschieden. Im Reingas werden die Temperatur auf ca. 70°C, SOₓ (SO₂ und SO₃) auf ca. 200 mg/m³ [N.tr.], HCl auf < 5 mg/m³ [N.tr.], HF auf < 1 mg/m³ [N.tr.] und Staub auf <10 mg/m³ [N.tr.] reduziert. Dazu wird in einem offenen Sprühabsorber pro Stunde ca. 66.000 m³ Waschflüssigkeit (Dichte ca. 1,1 kg/m³, CaCO₃ ca. 3 % der Feststoffe, Verbrauch: CaCO₃ / S = ca. 1,03) umgewälzt. Von dieser Suspension werden ca. 200 m³/h zu Gipsentwässerung ausgeschleust, die auf eine Feststoffkonzentration von ca. 50% eingedickt wird. Das damit ausgeschleuste Wasser reicht aus, dass kein weiteres Abwasser ausgeschleust werden muss. Weiteres Wasser verdampft im Absorber, so dass in Summe ein Prozesswasserverbrauch von 170 m³/h entsteht. Dieser wird aus der Abflut des nachgeschalteten Natronlaugewäschers befriedigt.

Danach werden die dort entstehenden Reingase als Rohgase einer NaOH-Wäsche in einem Rauchgaswäscher 1 zugeführt, die als Sprühwäscher ausgeführt wird. Die Umlaufmenge beträgt insgesamt ca. 14.500 m³/h. Diese wird auf ca. 30°C abgekühlt. Die Kühlung der Umlauflösung wird in einem Kühlturm 8 realisiert. Bei einem NaOH-Verbrauch von ca. 725 kg/h werden die Schadstoffe weiter reduziert. Im Reingas werden die Temperatur auf ca. 40°C, SOₓ auf ca. <5 mg/m³ [N.tr.], HCL auf <<1 mg/m³ [N.tr.], HF auf <<1 mg/m³ [N.tr.] und Staub auf <1 mg/m³ [N.tr.] reduziert. Ein Teil der Abflut 6 dieses Prozesses (ca. 170 m³/h) wird dem REA-Prozess als Prozesswasser zugeführt, der Rest der Abflut wird in den Kühlturm 8 geleitet, in dem das Wasser dann verdampft. Das im Kühlturm 8 zusätzlich verdampfende Wasser muss durch Prozesswasser ausgeglichen werden. Das entstandene Reingas kann dann einer CO₂-Wäsche zugeführt werden.

Der Rauchgaswäscher 1 ist Bestandteil der Rauchgasbehandlungsvorrichtungen, mit welchen ein bei der Brennstoffverfeuerung in der Brennkammer eines Dampferzeugers eines Großkraftwerkes entstehender Rauchgasstrom gereinigt und weitestgehend von CO₂ befreit wird.

Anders als beim vorstehenden Ausführungsbeispiel, kann die Rauchgasbehandlungsvorrichtung aber auch lediglich einen NaOH-Rauchgaswäscher 1 mit einer vorgeschalteten Rauchgasentschwefelungsanlage umfassen, was insbesondere dann zweckmäßig ist, wenn die Rauchgasbehandlungsvorrichtung Bestandteil einer Rauchgasbehandlungsanlage eines im OxyFuel-Betrieb gefahrenen Großkraftwerkes handelt. Hier wird dann der hoch CO₂-haltige Rauchgasstrom mit der im Rezirkulationskreislauf geführten Waschflüssigkeit behandelt, wobei dieser im Kühlturm durch Verdampfen des darin enthaltenen Wassers ein Großteil der darin enthaltenden Wassermenge entnommen wird.

In ebenfalls nicht dargestellter Weiterbildung des Ausführungsbeispieles ist es auch noch möglich, das nach der CO₂-Wäsche vom CO₂ gereinigte Rauchgas in den Kühlturm einzuleiten und über diesen in die Atmosphäre abzugeben. Bei dieser Ausführungsform kann dann auf einen separaten, der CO₂-Wäsche zugeordneten Schornstein für die gereinigte Rauchgasableitung verzichtet werden.

## Patentansprüche

1. Rauchgasbehandlungsvorrichtung umfassend einen Rauchgaswäscher (1) mit angeschlossenem Rezirkulationskreislauf, in welchem eine natriumhydroxidhaltiges Absorptionsmittel und in dem Rauchgaswäscher (1) aus dem zu reinigenden Rauchgasstrom auskondensiertes Wasser enthaltende Flüssigkeit rezirkuliert, und einer in dem Rezirkulationskreislauf angeordneten Kühlvorrichtung, wobei der Rauchgaswäscher (1) mit einer vorgeschalteten, Rauchgas zuführenden Rauchgasentschwefelungsanlage verbunden ist,
**dadurch gekennzeichnet,**
**dass** die in dem Rezirkulationskreislauf angeordnete Kühlvorrichtung ein Kühlturm (8) ist.

2. Rauchgasbehandlungsvorrichtung nach Anspruch 1, **dadurch gekennzeichnet, dass** der Rauchgaswäscher (1) mit einer nachgeschalteten, das im Rauchgaswäscher (1) behandelte Rauchgas aufnehmenden CO₂-Wäsche mittels eines aminhaltigen Absorptionsmittels verbunden ist.

3. Rauchgasbehandlungsvorrichtung Rauchgaswäscher (1) nach Anspruch 2, **dadurch gekennzeichnet, dass** in den Kühlturm (8) eine das die CO₂-Wäsche verlassende, CO₂-gereinigte Rauchgas führende Leitung einmündet.

4. Rauchgasbehandlungsvorrichtung nach einem der vorhergehenden Ansprüche, **dadurch gekennzeichnet, dass** sie Bestandteil einer den bei der Brennstoffverfeuerung in der Brennkammer eines Dampferzeugers eines Großkraftwerks entstehenden Rauchgasstrom reinigenden Rauchgasbehandlungsanlage ist.

5. Verfahren zur Rauchgasreinigung, bei welchem Rauchgas nach vorhergehender Behandlung in einer Rauchgasentschwefelungsanlage in einem mit einem natriumhydroxidhaltigen Absorptionsmittel betriebenen Rauchgaswäscher (1) behandelt wird, der einen angeschlossenen Rezirkulationskreislauf aufweist, in welchem eine natriumhydroxidhaltiges Absorptionsmittel und im Rauchgaswäscher (1) auskondensiertes Wasser enthaltende Flüssigkeit rezirkuliert und gekühlt wird, **dadurch gekennzeichnet,**
**dass** die im Rezirkulationskreislauf rezirkulierte Flüssigkeit durch Verrieselung (9) in einem Kühlturm (8) gekühlt und zum Rauchgaswäscher (1) rückgeführt wird.

6. Verfahren nach Anspruch 5, **dadurch gekennzeichnet, dass** das Rauchgas im Anschluss an den Rauchgaswäscher (1) in einer nachgeschalteten CO₂-Wäsche mit einem aminhaltigen Absorptionsmittel behandelt wird.

7. Verfahren nach Anspruch 6, **dadurch gekennzeichnet, dass** das die CO₂-Wäsche verlassende, CO₂-gereinigte Rauchgas dem Kühlturm (8) zugeführt wird.

8. Verfahren nach einem der Ansprüche 5-7, **dadurch gekennzeichnet, dass** bei der Brennstoffverfeuerung in der Brennkammer eines Dampferzeugers eines Großkraftwerks entstehender Rauchgasstrom gereinigt wird.
